(19) Europäisches Patentamt
European Patent Office
Office européen des brevets

(11) **EP 2 464 696 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(21) Anmeldenummer: **10754860.4**

(22) Anmeldetag: **13.08.2010**

(51) Int Cl.:
*C09D 11/00* (2006.01)    *C09D 11/02* (2006.01)
*C09C 1/00* (2006.01)

(86) Internationale Anmeldenummer:
**PCT/EP2010/004983**

(87) Internationale Veröffentlichungsnummer:
**WO 2011/018239 (17.02.2011 Gazette 2011/07)**

(54) **TINTENSTRAHLDRUCKTINTE ENTHALTEND EFFEKTPIGMENTE MIT HOHEM GLANZ**

INK JET PRINTER INK COMPRISING EFFECT PIGMENTS HAVING HIGH GLOSS

ENCRE D'IMPRESSION À JET D'ENCRE RENFERMANT DES PIGMENTS À EFFET À BRILLANCE ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **14.08.2009 DE 102009037323**

(43) Veröffentlichungstag der Anmeldung:
**20.06.2012 Patentblatt 2012/25**

(73) Patentinhaber: **Eckart GmbH**
**91235 Hartenstein (DE)**

(72) Erfinder:
• **BECKER, Michael**
**91207 Lauf (DE)**
• **ENGEL, Stefan**
**90607 Rückersdorf (DE)**

(74) Vertreter: **Walcher, Armin et al**
**Louis, Pöhlau, Lohrentz**
**Postfach 3055**
**90014 Nürnberg (DE)**

(56) Entgegenhaltungen:
**EP-A1- 1 862 511        EP-A1- 1 932 889**
**EP-A1- 2 042 569        EP-A1- 2 083 052**
**WO-A1-2005/049745     US-A1- 2008 250 970**

EP 2 464 696 B1

**Beschreibung**

Farbige Tintenstrahldrucktinten werden seit vielen Jahren eingesetzt. Mit Effektpigmenten pigmentierte Tintenstrahldrucktinten sind hingegen kommerziell praktisch noch nicht verfügbar. Normalerweise sind derartige Pigmente aufgrund ihrer plättchenförmigen Struktur und ihrer typischen Ausdehnungen im Bereich 5-50 $\mu$m zu groß für die üblichen Tintenstrahldrucker. Diese weisen ein enges System aus Kanälen, Schläuchen und Düsen auf. Auch hat man bei Effektpigmenten mit veränderten Viskositäten der Tintenstrahldrucktinten und mit Absetzproblemen der Effektpigmente zu kämpfen.

In den letzten Jahren sind einige Patentanmeldungen zu diesem Thema eingereicht worden. Hier werden plättchenförmige Aluminiumeffektpigmente beschrieben, die hinreichend klein sind, um keine Verstopfungen des Druckkopfs zu verursachen. Überraschenderweise weisen diese kleinen Aluminiumeffektpigmente dennoch einen guten optischen Effekt auf.

Die WO 2009/083176 A1 offenbart Aluminiumeffektpigmente, die aufgrund ihrer sehr geringen Größe in Tintenstrahldrucktinten eingesetzt werden können. Die Aluminiumeffektpigmente werden in Gegenwart bestimmter Additive durch Vermahlung zerkleinert.

Die WO 2009/010288 A2 offenbart Aluminiumeffektpigmente und damit pigmentierte Tintenstrahldrucktinten, die über sehr geringe mittlere Dicken und geringe Größen verfügen und durch Vermahlung hergestellt werden können.

Die WO 2004/035684 A2 offenbart wässrige Tintenstrahldrucktinten, die Effektpigmente enthalten.

Die US 2006/0034787 A1 offenbart durch PVD-Verfahren hergestellte Effektpigmente mit einer mittleren Schicht aus Aluminium, welches beidseitig von Schichten aus $SiO_2$ flankiert wird, wobei $0,70 \leq z \leq 2,0$ ist. Diese Pigmente können u.a. auch in Tintenstrahldrucktinten eingesetzt werden.

Die WO 2007/054379 A1 offenbart Interferenzpigmente auf Basis dünner Glasflakes. Diese können neben vielen anderen Anwendungen auch in Tintenstrahldrucktinten eingesetzt werden.

Die EP 1 862 511 A1 offenbart ebenfalls Metalleffektpigmente und damit pigmentierte Tintenstrahldrucktinten.

Die US 2008/0250970 A1 offenbart u.a. Tintenstrahldrucktinten, die mit Metalleffektpigmenten in kleinen Konzentrationen pigmentiert sein können. Die Druckfarben weisen sehr hohen Glanz auf, wenn die Tintenstrahldrucktinten auf Photopapier aufgedruckt werden. Photopapier ist ein stark saugender Untergrund, bei dem z.B. Bindemittel in das Substrat diffundieren und bei dem daher praktisch immer hochglänzende Applikationen erhalten werden können. Photopapier ist als zu bedruckendes Substrat kommerziell weniger interessant.

Mit Metalleffektpigmenten pigmentierte Tintenstrahldrucktinten werden ebenfalls in der US 2008/0182083 A1 offenbart.

Der Stand der Technik offenbart mit Effektpigmenten pigmentierte Tintenstrahldrucktinten. Bei den bekannten pigmentierten Tintenstrahldrucktinten kommt es nach einer Applikation jedoch häufig nicht zu einem optimalen Effekt, insbesondere wenn die pigmentierten Tintenstrahldrucktinten auf nicht-saugenden Untergründen appliziert werden. Gewöhnlicherweise muss in der Tintenstrahldrucktinte ein hohes Effektpigment/Bindemittelverhältnis eingestellt werden. Hierunter leidet jedoch die Reib- und Wischfestigkeit des Drucks.

Aufgabe der vorliegenden Erfindung ist es, eine mit Effektpigmenten pigmentierte Tintenstrahldrucktinte kostengünstig bereit zu stellen, die diese Nachteile nicht aufweist. Insbesondere soll die bereitzustellende Tintenstrahldrucktinte im Druck auch auf nicht-saugenden Untergründen eine gute Effektausbildung und insbesondere einen hohen Glanz ermöglichen. Dabei sollte möglichst gleichzeitig eine hohe bis ausreichende Reib- und Wischfestigkeit des Drucks erreicht werden.

Die erfindungsgemäße Aufgabe wurde gelöst durch Bereitstellung einer Tintenstrahldrucktinte enthaltend Effektpigmente, Bindemittel und organische Lösemittel oder Lösemittelgemisch, wobei die Effektpigmente

a) Aluminiumeffektpigmente mit einer mittleren Dicke aus einem Bereich von 10 bis 100 nm, einem $d_{50}$-Wert der Summenhäufigkeitsverteilung der volumengemittelten Größenverteilungsfunktion von wenigstens 1 $\mu$m und mit einem $d_{98}$-Wert der Summenhäufigkeitsverteilung der volumengemittelten Größenverteilungsfunktion von weniger als 15 $\mu$m und/oder

b) Perlglanzpigmente mit einem $d_{90}$-Wert der Summenhäufigkeitsverteilung der volumengemittelten Größenverteilungsfunktion aus einem Bereich von 3,5 bis 15 $\mu$m enthalten und wobei die Tintenstrahldrucktinte eine Viskosität aus einem Bereich von 1 bis 50 mPa·s und ein Gewichtsverhältnis von Effektpigment zu Bindemittel von 2 bis 15 aufweist und wobei das Bindemittel $C_1$-$C_3$ Alkylcellulose ist.

Als Effektpigmente werden bei einer bevorzugten Ausführungsform Atuminiumeffektpigmente verwendet. Hier können Aluminiumeffektpigmente, die nach PVD-Verfahren hergestellt sind und auch als PVD-Aluminiumeffektpigmente gezeichnet werden, oder Aluminiumeffektpigmente, die durch Vermahlung hergestellt sind, eingesetzt werden. Bevorzugt werden die in den WO 2009/083176 A1 offenbarten, als Pigmentpräparation vorliegenden Aluminiumeffektpigmente verwendet.

Aluminiumeffektpigmente weisen eine plättchenförmige Form auf und orientieren sich nach dem Applizieren weitgehend parallel zum Untergrund. Sie wirken als kleine Spiegel, welche direkt einfallendes Licht reflektieren. Werden diese Pigmente bis zu einer mittleren Größe deutlich unterhalb von 1 $\mu$m ($d_{50}$) zerkleinert, so sind sie zu klein, um noch den typischen metallischen Glanz, Helligkeit und Hell-Dunkel-Flop ausbilden zu können. Jedoch können diese Effekte bei mittleren Größen oberhalb von 1 $\mu$m überraschenderweise beobachtet werden. Gemäß der Erfindung liegt mithin die mittlere Größe ($d_{50}$) bei wenigstens 1 $\mu$m.

Die $d_{50}$-, $d_{98}$- und $d_{100}$-Werte beziehen sich auf die Volumen-gemittelte Partikelgrößenverteilung in der Darstellung als Summenhäufigkeitsverteilung. Diese wird mittels Lasergranulometrle auf Grundlage der Fraunhoferbeugungstheorie gemessen. Typischerweise wird hierzu ein Gerät vom Typ Cilas 1064 (Fa. Cilas, Orleans, Frankreich) eingesetzt.

Liegt der $d_{98}$-Wert oberhalb von 15 $\mu$m, so können die Aluminiumeffektpigmente nicht mehr die Druckvorrichtung, die ein System aus Schläuchen, Kanälen, Filter und einen Druckkopf umfasst, passieren. Es käme zu Verstopfungen und der Druckkopf würde unbrauchbar sein.

Gemäß einer bevorzugten Ausführungsform der vorliegenden Erfindung weisen die Aluminiumeffektpigmente einen $d_{98}$-Wert aus einem Bereich von 2 $\mu$m bis 12 $\mu$m, weiter bevorzugt von 2,5 $\mu$m bis 8 $\mu$m und besonders bevorzugt von 3 $\mu$m bis unter 6 $\mu$m auf.

Bei diesen bevorzugten Ausführungsformen liegt der $d_{50}$-Wert der Partikelgrößenverteilung in einem Bereich von 1 bis unter 6 $\mu$m, weiter bevorzugt von 1,5 bis 5 $\mu$m, noch weiter bevorzugt 1,2 bis 5 $\mu$m und besonders bevorzugt von 1,5 bis 5 $\mu$m und ganz besonders bevorzugt von 2 bis 5 $\mu$m.
Die Größenverteilungskurve der Aluminiumeffektpigmente ist sehr eng. Bevorzugt haben 100 % der Aluminiumeffektpigmente in der erfindungsgemäßen Tintenstrahldrucktinte einen $d_{100}$-Wert von unter 15 $\mu$m, weiter bevorzugt von unter 12 $\mu$m, besonders bevorzugt von unter 10 $\mu$m und ganz besonders bevorzugt von unter 6 $\mu$m.

Bei weiteren bevorzugten Ausführungsformen liegen 100 % der Aluminiumeffektpigmentteilchen in einem Größenbereich von 0,3 bis 8 $\mu$m und besonders bevorzugt von 0,5 bis 7 $\mu$m.

Bevorzugt werden Aluminiumeffektpigmente mit einem $d_{100}$ von unter 12 $\mu$m, besonders bevorzugt von unter 10 $\mu$m verwendet, da beispielsweise der Durchmesser der Düsen oder anderer für die Drucktinte durchgängiger Teile des Druckkopfs meist in einem Bereich von 20 bis 50 $\mu$m liegen.

Im Prinzip ist die Obergrenze der Aluminiumeffektpigmente bestimmt durch die Durchmesser der gesamten Druckkopfkonfiguration wie Schläuche, Kanäle, Filter, und Düsen. Das Druckkopfsystem muss als Pumpe auf die Tintenstrahldrucktinte wirken können. Bei größeren Durchmessern der vorgenannten Elemente des Druckkopfes können auch größer dimensionierte Aluminiumeffektpigmente verwendet werden.

Bevorzugt liegt das Verhältnis des $d_{50}$-Wertes der Aluminiumeffektpigmente zum Durchmesser der Druckkopfdüse in einem Bereich von of 0,02 to 0,5 und weiter bevorzugt von 0,03 to 0,2 und besonders bevorzugt von 0,04 to 0,12.

Plättchenförmige Aluminiumeffektpigmente mit Dimensionen, die im vorstehend angegeben Verhältnisbereich liegen, können die Druckkopfdüsen leicht ohne Verstopfung passieren.

Um zu derartig kleinen Aluminiumeffektpigmenten zu gelangen, werden diese bevorzugt durch einen Vermahlungsschritt zerkleinert und in eine Pigmentpräparation überführt. Diese Pigmentpräparation enthält bevorzugt, wie in der WO 2009/083176 A1 beschrieben, Aluminiumeffektpigmente, mindestens ein Lösemittel und mindestens ein Additiv, wobei die Aluminiumeffektpigmente einen $d_{98}$-Wert der Volumen gemittelten Summenverteilungskurve von weniger als 15 $\mu$m aufweisen.
Das mindestens eine Additiv ist gemäß der WO 2009/083176 ein phosphorhaltiges Additiv und das Lösemittel hat eine Viskosität von mindestens 1,8 mPa·s bei 25 °C.

Gemäß einer weiter bevorzugten Ausführungsform umfasst das phosphorhaltige Additiv mindestens eine Phosphinsäure, Phosphinsäureester, Phosphonsäure, Phosphonsäureester, Phosphorsäure und/oder Phosphorsäureester.

Die Phosphorsäure oder Phosphorsäureester weisen die folgende allgemeine Formel auf (I):

$$(O)P(OR^1)(OR^2)(OR^3) \qquad (I),$$

Die Phosphonsäure oder Phosphonsäureester weisen die folgende allgemeine Formel auf (II):

$$(O)PR^4(OR^1)(OR^2) \qquad (II),$$

Die Phosphinsäure oder Phosphinsäureester weisen die folgende allgemeine Formel auf (III):

$$(O)PR^4R^5(OR^1) \qquad (III),$$

wobei
$R^1$, $R^2$ und $R^3$ unabhängig voneinander H oder einen organischen Rest mit 1 bis 30 C-Atomen sind, welcher optional Heteroatome wie O, S, und/oder N enthält, und $R^4$ und $R^5$ unabhängig voneinander einen organischen Rest mit 1 bis 30 C-Atomen sind, welcher optional Heteroatome wie O, S, und/oder N enthält.

Alle organischen Reste $R^1$, $R^2$, $R^3$, $R^4$ oder $R^5$ können unabhängig voneinander verzweigte oder geradkettige Alkyl-, Alkylaryl, Aryl- oder Arylalkyl-Reste sein.

Bevorzugt sind die organischen Reste verzweigte oder geradkettige Alkylreste mit 1 bis 24 C-Atomen, bevorzugt 6 bis 18 C-Atomen, die optional Heteroatome wie O, S, und/oder N enthalten.

Besonders bevorzugt sind Alkylphosphonsäuren und deren Ester, die weiter bevorzugt einen Alkylrest mit 6 bis 18 C-Atomen und besonders bevorzugt 6 bis 18 C-Atome aufweisen.

Ganz besonders bevorzugt sind Octanphosphonsäure oder Dodecylphosphonsäure.

Bei einer besonders bevorzugten Ausführungsform werden die Aluminiumeffektpigmente in bekannter Weise durch PVD-Verfahren hergestellt.

Bei einer weiteren bevorzugten Ausführungsform werden die Aluminiumeffektpigmente durch Vermahlung hergestellt. Bevorzugt werden die in der WO 2009/010288 A2 offenbarten Aluminiumeffektpigmente verwendet.

Um zu den erfindungsgemäß verwendeten Aluminiumeffektpigmenten unter Verwendung einer Kugelmühle zu gelangen, wird Aluminium in einem ersten Schritt geschmolzen und nachfolgend unter Verwendung der dem Fachmann bekannten Verfahren zerstäubt oder verdüst. Die kugelförmigen Partikel, die durch Zerstäubung oder Verdüsung erhalten werden, werden anschließend in einer Perlmühle oder in einer Kugelmühle bis zur gewünschten Teilchengröße der Aluminiumeffektpigmente vermahlen. Der Prozess des Kugel- oder Perlmahlens von Metallpartikeln ist ein Prozess, der als "Hall-Prozess" bekannt ist.

Um sehr dünne Pigmente zu erhalten, werden vorzugsweise sphärische Kugeln verwendet, die aus einem Material mit einem Gewicht von 2 bis 13 mg pro Kugel bestehen. Bevorzugt werden hierzu Glaskugeln verwendet. Außerdem wird vorzugsweise ein feines plättchenförmiges Aluminiumpigment als Ausgangsmaterial für die Produktion der Aluminiumeffektpigmente zur Verwendung in der erfindungsgemäßen Tintenstrahldrucktinte verwendet.

Die durchschnittliche Teilchengröße ($d_{50}$) des Aluminiumgriesses $d_{50,Grieß}$, der für die Herstellung dieser dünnen Aluminiumeffektpigmente verwendet wird, ist < 20 $\mu$m, bevorzugt < 15 $\mu$m, weiter bevorzugt < 10 $\mu$m und am meisten bevorzugt < 8 $\mu$m. Bei einer weiteren Ausführungsform der Erfindung wird die durchschnittliche Teilchengrößenverteilung wie folgt gekennzeichnet $d_{10,Grieß}$ < 3 $\mu$m, $d_{50,Grieß}$ < 5 $\mu$m, $d_{90,Grieß}$ < 8 $\mu$m.

Um ein sehr dünnes Aluminiumeffektpigmente mit einer sehr kleinen Dickenverteilung zu erhalten, z.B. ein Aluminiumeffektpigment mit einer durchschnittlichen Dicke $h_{50}$ von 15 bis 80 nm und einem Dickenspan (Dickenverteilung) $\Delta h$ von 30 bis weniger als 70% gemäß Formel (I), wird vorzugsweise ein sehr feines Aluminiumkorn, d.h. ein sehr feiner Aluminiumgrieß, mit einer engen Größenverteilung als Ausgangsmaterial verwendet. Die Dickenverteilung wird dabei in der Form einer Summenverteilung (Zahlenmittel) angegeben. Die relative Breite der Dickenverteilung $\Delta h$ ("Dickenspan") wird durch Berechnung gemäß der Formel (I)

$$\Delta h = 100\ (h_{90} - h_{10})\ /\ h_{50} \qquad\qquad (I)$$

ermittelt.

Der $h_{90}$-Wert gibt die Pigmentdicke an, die 90 % der Teilchen maximal aufweisen. Entsprechend gibt der $h_{10}$-Wert die Pigmentdicke an, die 10 % der Teilchen maximal aufweisen.

Vorzugsweise wird ein Aluminiumkorn (Aluminiumgrieß) mit einer Teilchengröße von $d_{10,\,Grieß}$ < 3,0 $\mu$m, $d_{50,\,Grieß}$ < 5,0 $\mu$m und $d_{90,\,Grieß}$ < 8,0 $\mu$m verwendet. Weiter bevorzugt wird ein Aluminiumkorn (Aluminiumgrieß) mit einer Teilchengröße von $d_{10,\,Grieß}$ < 0,6 $\mu$m, $d_{50,\,Grieß}$ < 2,0 $\mu$m und $d_{90,\,Grieß}$ < 4,0 $\mu$m verwendet.

Normalerweise wird die Teilchendicke festgestellt, indem man den Spreitwert (entsprechend DIN 55923) bestimmt und hieraus die Teilchendicke berechnet und/oder durch Auszählung und Mittlung der Teilchendicken im REM. Aus der Spreitwertmethode lässt sich nur die mittlere Dicke ermitteln, aber nicht die Verteilung der Teilchendicken.

Aus diesem Grund wurde die durchschnittliche Dicke des Aluminiumeffektpigments der vorliegenden Erfindung mittels REM festgestellt. üblicherweise werden mindestens 100 Partikel analysiert um ein repräsentatives Ergebnis zu erhalten. Details zu der Methode sind der WO 2004/087816 zu entnehmen.

Die mittlere Dicke $h_{50}$ der Aluminiumeffektpigmente, die durch Messung anhand von REM-Bilder erfolgt (REM: Rasterelektronenmikroskop), liegt vorzugsweise in einem Bereich von 15 bis 150 nm. Vorzugsweise liegt die durchschnittliche Dicke $h_{50}$ in einem Bereich von 15 bis 100 nm und weiter bevorzugt von 20 bis 80 nm.

Es stellte sich heraus, dass, nachdem man eine aluminiumeffektpigmenthaltige Tintenstrahldrucktinte gemäß der vorliegenden Erfindung auf ein Substrat aufgebracht hat, sehr ansprechende Metalleffekte unter Verwendung von Metalleffektpigmenten mit diesen sehr dünnen durchschnittlichen Dicken erhalten werden können.

Eine weiterhin sehr bevorzugte durchschnittliche Dicke $h_{50}$ liegt in einem Bereich von 30 bis unter 80 nm. Mit solch dünnen durch Vermahlung erhaltenen Aluminiumeffektpigmenten können sehr brillante Effekte erzielt werden.

Außer hohem Glanz und hohem Flop haben die Drucke das Aussehen eines flüssigen Metalleffektes, der üblicherweise typisch für PVD-Pigmente ist.

Weniger brillante, aber noch angemessene metallische Effekte können mit einer durchschnittlichen Dicke $h_{50}$ von 80 bis 130 nm erzielt werden.

Unterhalb eines $h_{50}$ von 15 nm sind die Pigmente zu transparent und erscheinen wegen ihrer verminderten reflektierenden Eigenschaften als sehr dunkel, da es dann verstärkt zu Absorptionsphänomenen kommt. Über einem $h_{50}$ von 150 nm sinkt die optische Leistung des Aluminiumeffektpigmentes und Pigmentmaterial wird wegen der verringerten spezifischen Deckkraft vergeudet, d.h. der abgedeckten Fläche des Untergrunds pro Gewichtseinheit an Aluminiumeffektpigment.

Aus der Dickenmessung mittels REM wird ebenfalls die Dickenverteilung erhalten. Diese wird in die Form einer Summenverteilung (Zahlenmittel) gebracht und aus dieser lässt sich die relative Breite der Dickenverteilung Δh ("Dickenspan") nach Formel (I) ermitteln.

Der Dickenspan Δh liegt bevorzugt in einem Bereich von 30 bis 140%. Bei einer weiter bevorzugten Ausführungsform reicht die durchschnittliche Bandbreite der Dickenverteilung Δh von 30 bis 100 % und weiter bevorzugt von 30 bis 70 % und besonders bevorzugt von 30 bis 50 %.

Sehr bevorzugt werden Aluminiumeffektpigmente mit einer durchschnittlichen Dicke $h_{50}$ von 15 bis 80 nm und einem Δh von 30 bis weniger als 70 %.

Es stellte sich überraschenderweise heraus, dass durch eine derartige Größenverteilungskurve an dünnen durch Vermahlung erhaltenen Aluminiumeffektpigmenten in der Tintenstrahldrucktinte der vorliegenden Erfindung nach dem Aufbringen dieser Tintenstrahldrucktinte auf ein Substrat optische Effekte mit einem sehr hohen Glanz und Flop sowie einem ansprechenden flüssigern Metalleffekt erzielt werden könnten.

Ein niedriger Δh-Wert (Dickenspan) ist bevorzugt, um die angestrebten hochwertigen optischen Effekte zu erzielen. Pigmente mit einem Δh von über 140 % werden im Tintenstrahltintendruck nicht gut geschichtet. Weiterhin kann wegen der geringen Orientierungszeit, die zwischen der Aufbringung der Tintenstrahldrucktinte und der Aushärtung derselben liegt, eine optimale Orientierung nur für Pigmente mit einem Δh von weniger als 140 %, weiter bevorzugt von weniger als 100 %, erzielt werden.

Die erfindungsgemäße Tintenstrahldrucktinte enthält vorzugsweise sehr dünne Aluminiumeffektpigmente mit einer eher geringen Breite (Span) der Partikelgrößenverteilungskurve, um eine gleichmäßige Orientierung von im Wesentlichen allen Aluminiumeffektpigmenten innerhalb der kurzen Zeitspanne, die während der Abdampfung des Lösemittels nach Aufbringen der Tintenstrahldrucktinte zur Verfügung steht, zu ermöglichen.

Die Aluminiumeffektpigmente der vorliegenden Erfindung besitzen vorzugsweise eine Dickenverteilungskurve mit einem $h_{90}$-Wert von unter 110 nm und weiter bevorzugt von unter 75 nm. Der $h_{95}$- Wert der Dickenverteilung liegt bevorzugt unter 150 nm und weiter bevorzugt unter 120 nm. Zusätzlich liegt der $h_{99}$ - Wert vorzugsweise unter 140 nm und weiter bevorzugt unter 90 nm

Bei einer weiteren bevorzugten Ausführungsform werden als Effektpigmente Perlglanzpigmente eingesetzt.

Hier stellen sich die oben geschilderten Probleme der Dimensionen des Druckkopfes und der potentiellen Verstopfungen des Druckkopfes bei Verwendung von zu groß dimensionierten Perlglanzpigmenten in gleicher Weise.

Die Größenverteilung von Perlglanzpigmenten lässt sich ebenso wie diejenige von Aluminiumeffektpigmenten mittels der Lasergranulometrie bestimmen. Da hier jedoch die Aluminiumeffektpigmente aufgrund ihrer optischen Eigenschaften (Brechzahl, Absorptionskonstanten) ein höheres Signal liefern, ist zur Charakterisierung des Grobanteils im Fall der Perlglanzpigmente der $d_{90}$-Wert das geeignetere Maß. Der $d_{98}$-Wert ist hier relativ schlecht reproduzierbar zu messen. Je kleiner dieser Wert ist, desto besser sind die erfindungsgemäßen perlglanzpigmenthaltigen Tintenstrahldrucktinten in unterschiedlichen Tintenstrahldruckköpfen einsetzbar.

Erfindungsgemäß weisen die Perlglanzpigmente eine Größenverteilung mit einem $d_{90}$-Wert von 3,5 bis 15 $\mu$m auf. Bevorzugt weisen die Perlglanzpigmente eine Größenverteilung mit einem $d_{90}$-Wert aus einem Bereich von 4 bis 13 $\mu$m, weiter bevorzugt von 5,5 bis 12 $\mu$m, besonders bevorzugt 5 bis 10 $\mu$m, ganz besonders bevorzugt 5,1 bis 8 $\mu$m auf.

Gemäß einer weiteren Ausführungsform der Erfindung weisen die Perlglanzpigmente eine Größenverteilung mit einem $d_{95}$-Wert aus einem Bereich von 5 bis 20 $\mu$m, bevorzugt 5,5 bis 15 $\mu$m, weiter bevorzugt von 6 bis 13 $\mu$m, besonders bevorzugt 6,5 bis 10 $\mu$m, auf.

Gemäß einer weiteren Ausführungsform der Erfindung weisen die Perlglanzpigmente eine Größenverteilung mit einem $d_{50}$-Wert von 2 bis 10 $\mu$m, bevorzugt von 2,5 bis 8 $\mu$m, weiter bevorzugt von 3 bis 7,5 $\mu$m, besonders bevorzugt 3,5 bis 6 $\mu$m auf.

Bei einer bevorzugten Ausführungsform weist das Substrat der Perlglanzpigmente eine mittlere Höhe (Schichtdicke) $h_s$ aus einem Bereich von 40 bis 150 nm, bevorzugt von 50 bis 140 nm, weiter bevorzugt von 60 bis 130 nm, weiter bevorzugt von 70 bis 120 nm und besonders bevorzugt von 80 bis 110 nm auf.

Unterhalb einer Schichtdicke von 40 nm können die Pigmente mechanisch zu zerbrechlich sein. Des Weiteren sind die Zeiten der Beschichtung mit Metall oder hochbrechendem Metalloxid aufgrund der extrem hohen spezifischen Oberfläche zu lang, um wirtschaftlich vertretbar zu sein. Unter der spezifischen Oberfläche wird die Oberfläche pro Gewichtseinheit verstanden. Da die Schichtdicke der Substrate der erfindungsgemäßen Perlglanzpigmente äußerst gering ist, weisen diese Substrate pro Gewichtseinheit eine sehr große Oberfläche im Vergleich zu herkömmlichen Substraten auf.

Die Standardabweichung bei der mittleren Höhe $h_s$ liegt vorzugsweise in einem Bereich von 25 bis 80 %, weiter bevorzugt von 28 bis 60 % und besonders bevorzugt von 30 bis 50 %.

Herstellungsbedingt sind die Teilchendicken und die Teilchengrößen der Substrate der Perlglanzpigmente im Fall von Glimmer weitgehend voneinander abhängig. Große Teilchengrößen bedingen entsprechend große Teilchendicken und umgekehrt. Für die Verdruckbarkeit der erfindungsgemäßen Tintenstrahldrucktinten ist die Teilchengröße der Perlglanzpigmente maßgeblich. Zu grobe und somit entsprechend dicke Perlglanzpigmente sind für kommerziell erhältliche Tintenstrahldruckköpfe weniger geeignet. Oberhalb einer mittleren Höhe $h_s$ des Substrats der Perlglanzpigmente von 150 nm lassen sich die erfindungsgemäßen Drucktinten, vorzugsweise Tintenstrahltinten, in kommerziell erhältlichen Tintenstrahldruckköpfen unzureichend oder gar nicht verdrucken.

Die in den erfindungsgemäßen Tintenstrahldrucktinten enthaltenen äußerst feinen Perlglanzpigmente basieren mithin auf einem weitgehend transparenten Substrat mit einem geringen $d_{90}$-Wert und einer geringen mittleren Schichtdicke $h_s$. Somit wird die Verdruckbarkeit in kommerziell erhältlichen Tintenstrahldruckköpfen gewährleistet sowie darüber hinaus überraschenderweise eine sehr gute mechanische Stabilität. Gleichzeitig besitzen die Perlglanzpigmente starke Interferenzfarben und sind somit für farbstarke qualitativ hochwertige Drucke mit Perlglanzeffekt einsetzbar.

Es hat sich gezeigt, dass Perlglanzpigmente mit nachstehenden Kombinationen von Partikelgröße (Durchmesser) $d_{90}$ bzw. $d_{95}$ und Schichtdicke (mittlere Höhe) $h_s$ besonders geeignet sind. Bei diesen nachstehenden Kombinationen werden sehr kleine und feine Perlglanzpigmente mit zugleich überraschend hoher mechanischer Stabilität beim Verdrucken der erfindungsgemäßen Tintenstrahldrucktinten in kommerziell erhältlichen Tintenstrahldruckköpfen erhalten. Äußerst überraschend war des Weiteren, dass diese kleinen und feinen Perlglanzpigmente ungeachtet der geringen Größe trotzdem den für Perlglanzpigmente typischen Tiefenglanz aufweisen.

Erfindungsgemäß enthalten die erfindungsgemäßen Tintenstrahldrucktinten, vorzugsweise Perlglanzpigmente, deren $d_{90}$-Wert der Summenhäufigkeitsverteilung der volumengemittelten Größenverteilungsfunktion in einem Bereich von 3,5 bis 15 $\mu$m, vorzugsweise in einem Bereich von 4 bis 13 $\mu$m, und deren mittlere Höhe $h_s$ in einem Bereich von 40 bis 150 nm, vorzugsweise in einem Bereich von 50 bis 140 nm liegen.

Bei einer weiteren bevorzugten Ausführungsform enthalten die erfindungsgemäßen Tintenstrahldrucktinten Petlgtanzpigmente, deren $d_{90}$-Wert der Summenhäufigkeitsverteilung der volumengemittelten Größenverteilungsfunktion in einem Bereich von 4,5 bis 12 $\mu$m, vorzugsweise in einem Bereich von 5 bis 10 $\mu$m, und deren mittlere Höhe $h_S$ in einem Bereich von 60 bis 130 nm, vorzugsweise in einem Bereich von 70 bis 120 nm, liegen.

Bei einer besonders bevorzugten Ausführungsform enthalten die erfindungsgemäßen Tintenstrahldrucktinten Perlglanzpigmente, deren $d_{90}$-Wert der Summenhäufigkeitsverteilung der volumengemittelten Größenverteilungsfunktion in einem Bereich von 5,1 bis 8 $\mu$m und deren mittlere Höhe $h_S$ in einem Bereich von 80 bis 110 nm liegen.

Bei einer weiteren erfindungsgemäßen Ausführungsform enthalten die erfindungsgemäßen Tintenstrahldrucktinten Perlglanzpigmente, deren $d_{95}$-Wert der Summenhäufigkeitsverteilung der volumengemittelten Größenverteilungsfunktion in einem Bereich von 5 bis 20 $\mu$m, vorzugsweise in einem Bereich von 5,5 bis 15 $\mu$m, und deren mittlere Höhe $h_S$ in einem Bereich von 40 bis 150 nm, vorzugsweise in einem Bereich von 50 bis 140 nm liegen.

Bei einer weiteren Ausführungsform enthalten die erflndungsgemäßen Tintenstrahldrucktinten Perlglanzpigmente, deren $d_{95}$-Wert der Summenhäufigkeitsverteilung der volumengemittelten Größenverteilungsfunktion in einem Bereich von 6 bis 13 $\mu$m, vorzugsweise in einem Bereich von 6,5 bis 10 $\mu$m, und deren mittlere Höhe $h_S$ in einem Bereich von 60 bis 130 nm, vorzugsweise in einem Bereich von 70 bis 120 nm liegen.

Bei einer weiteren Ausführungsform enthalten die erfindungsgemäßen Tintenstrahldrucktinten Perlglanzpigmente, deren $d_{90}$-Wert der Summenhäufigkeitsverteilung der volumengemittelten Größenverteilungsfunktion in einem Bereich von 3,5 bis 15 $\mu$m, vorzugsweise in einem Bereich von 4 bis 13 $\mu$m, und deren $d_{95}$-Wert der Summenhäufigkeitsverteilung der volumengemittelten Größenverteilungsfunktion in einem Bereich von 5 bis 20 $\mu$m, vorzugsweise ein einem Bereich von 5,5 bis 15 $\mu$m liegen.

Bei einer weiteren Ausführungsform enthalten die erfindungsgemäßen Tintenstrahldrucktinten Perlglanzpigmente, deren $d_{90}$-Wert der Summenhäufigkeitsverteilung der volumengemittelten Größenverteilungsfunktion in einem Bereich von 4,5 bis 12 $\mu$m, vorzugsweise in einem Bereich von 5 bis 10 $\mu$m, und deren $d_{95}$-Wert der Summenhäufigkeitsverteilung der volumengemittelten Größenverteilungsfunktion in einem Bereich von 6 bis 13 $\mu$m, vorzugsweise ein einem Bereich von 6,5 bis 10 $\mu$m liegen.

Gemäß einer bevorzugten Variante der Erfindung weisen die in der Tintenstrahltinte enthaltenen Perlglanzpigmente eine Metalloxidschicht aus $TiO_2$ und ein Substrat aus Glimmer auf. Bei dem Glimmer kann es sich um synthetischen oder natürlichen Glimmer handeln.

Die Viskosität der erfindungsgemäßen Tintenstrahldrucktinte liegt in einem Bereich von 1 bis 50 mPa·s. Hierbei wird die Viskosität mit einem R/S Rheometer der Fa. Brookfield mit einem Doppelspalt-Zylinder Meßsystem nach DIN 54453 mit der Vorgabe von 150 rpm bei 25°C gemessen. Vorzugsweise liegt die Viskosität der Tintenstrahldrucktinte in einem Bereich von 3 bis 30 mPa·s, besonders bevorzugt in einem Bereich von 4 bis 20 mPa·s.

Gemäß einer weiteren bevorzugten Weiterbildung der Erfindung weist die erfindungsgemäße Tintenstrahldrucktinte eine Oberflächenspannung von 18 bis 50 mN/m, weiter bevorzugt von 20 bis 45 mN/m, gemessen bei einer Temperatur von 25°C mit du Nouy's Ring-Methode, auf.

Gemäß einer weiteren bevorzugten Weiterbildung der Erfindung weist die erfindungsgemäße Tintenstrahldrucktinte eine Leitfähigkeit von 0 bis 5 mS/cm. vorzugsweise von 0,2 bis 4 mS/cm, gemessen bei einer Temperatur von 25 °C nach oder entsprechend DIN 53779, auf.

Die lösemittelbasierenden Tintenstrahldrucktinten der vorliegenden Erfindung haben vorzugsweise eine Viskosität von 4 bis 20 mPa·s, gemessen mit einem R/S Rheometer der Fa. Brookfield mit einem Doppelspalt-Zylinder Meßsystem nach DIN 54453 mit der Vorgabe von 150 rpm bei 25°C, und eine Oberflächenspannung von 20 bis 45 mN/m, gemessen bei einer Temperatur von 25°C mit du Nouy's Ring-Methode, und vorzugsweise eine Leitfähigkeit von 0 bis 5 mS/cm, gemessen bei einer Temperatur von 25 °C nach oder entsprechend DIN 53779.

Bei einer bevorzugten Ausführungsform liegen die Effektpigmente, Aluminiumeffektpigmente und/oder Periglanzeffektpigmente, in einer Konzentration von 0,2 bis 7 Gew.-%, weiter bevorzugt 0,3 - 6 % Gew.-%, besonders bevorzugt 0,4 bis 5 Gew.-% und ganz besonders bevorzugt 0,5 bis 3 Gew.-%, jeweils bezogen auf das Gesamtgewicht der Tintenstrahldrucktinte, vor.

Unterhalb von 0,2 Gew.-% ist die Effektausbildung und hier insbesondere der hohe Glanz, nur teilweise ausgebildet. Der Druck kann keine durchgehende Belegung mit den Effektpigmenten aufweisen und daher kann sich der damit verbundene und gewünschte Glanz nicht ausreichend ausbilden. Oberhalb von 7 Gew.-% werden die Druckfarben zu teuer, da die Effektpigmente naturgemäß den höchsten Rohstoffkostenanteil der Tintenstrahldrucktinte ausmachen.

Ein erfindungswesentliches Merkmal der erfindungsgemäßen Tintenstrahldrucktinten ist das hohe Gewichtsverhältnis von Effektpigment zu Bindemittel. Dieses Verhältnis beträgt 2 bis 15, bevorzugt 2,5 bis 10 und besonders bevorzugt 2,8 bis 6,25.

Im bisher offenbarten Stand der Technik werden immer wesentlich geringere Mengenverhältnisse offenbart, was insbesondere aus den dort offenbarten Ausführungsbeispielen hervorgeht. Auch ist im Bereich konventionell gefärbter Tintenstrahldrucktinten ein wesentlich niedrigeres Gewichtsverhältnis von ungefähr 1:1 üblich. Hier wird mit relativ hohen Bindemittelgehalten von ca. 4 - 6 Gew.-% in der Drucktinte gearbeitet, da andernfalls die gewünschte Reib- und Wischfestigkeit des Drucks nicht erreichbar ist.

Unterhalb eines Gewichtsverhältnisses von Effektpigment zu Bindemittel von 2 nimmt der Glanz der Drucke, insbesondere bei der Verdruckung auf einem nicht-porösen Substrat, signifikant ab. Oberhalb eines Verhältnisses von 15 schließlich ist die Reib- und Wischfestigkeit des Drucks nicht mehr akzeptabel, da hier zu wenig Bindemittel im Druck vorhanden ist.

Der überraschende Befund eines hohen Gewichtsverhältnisses von Effektpigmenten zu Bindemitteln in den erfindungsgemäßen Tintenstrahldrucktinten ist vermutlich auf die im Vergleich zu konventionellen Pigmenten relativ geringe spezifische Oberfläche der plättchenförmigen Effektpigmente zurückzuführen. Dadurch wird weniger Bindemittel benötig, um die Effektpigmente mechanisch stabil in den Druck einzubinden.

Hierbei ist zu beachten, dass die Bedruckung poröser Untergründe, wie beispielsweise der im Digitaldruck üblichen Mattpapiere und micropore-beschichteten Papieren, Folien und Platten, stets dazu führt, dass zusammen mit dem Lösemittel mindestens ein Teil des Bindemittels in den Poren des Untergrundes eindiffundiert. Man erhält mithin hochglänzende Drucke, da wenig oder kein Bindemittel im Druck vorhanden ist. Jedoch steht dann der Druckschicht entsprechend wenig oder kein Bindemittel mehr zur Verfügung, um den Zusammenhalt des Druckes zu gewährleisten. Bei einigen porösen Untergründen wie beispielsweise micropore-beschichteten Hochgfanzpapieren sind die Poren der Untergrundoberfläche so klein, dass zwar Lösemittel und Bindemittel in die Poren eindiffundieren können, jedoch nicht die größeren Effektpigmente. Somit kommt es zu einer weitgehenden räumlichen Trennung von Effektpigment und Bindemittel im Druck und damit zu einer nicht akzeptablen mechanischen Stabilität. Im Extremfall findet überhaupt keine Haftung des Effektpigments auf dem Untergrund mehr statt.

Überraschenderweise kann insbesondere bei der Bedruckung eines nicht-porösen Substrats mit der erfindungsgemäßen Tintenstrahldrucktinte die mechanische Stabilität des Druckes selbst bei kleinen Mengen Bindemittel weitgehend erhalten werden. Dass Bindemittel ist bevorzugt in Mengen von 0,1 bis 1,3 Gew.-%, weiter bevorzugt 0,15 bis 1,0 Gew.-%, besonders bevorzugt von 0,2 bis 0,8 Gew.-% und ganz besonders bevorzugt von 0,25 bis 0,6 Gew.-%, bezogen auf das Gesamtgewicht der Tintenstrahldrucktinte, in der erfindungsgemäßen Tintenstrahldrucktinte enthalten. Die Angaben beziehen sich dabei jeweils auf den Gehalt des Bindemittelfestkörpers.

Lösemittelhaltige Tintenstrahldrucktinten weisen üblicherweise Viskositäten im Bereich von 1 bis 50 mPas auf. Die erforderliche Viskosität wird dabei im Bereich konventioneller Tintenstrahldrucktinten üblicherweise durch die Menge des Bindemittels gesteuert. Überraschenderweise wurde festgestellt, dass bei den erfindungsgemäßen Tintenstrahldrucktinten, die Effektpigmente enthalten, sehr geringe Mengen an Bindemittel nötig sind, um die erforderlichen Viskositäten einstelten zu können.

Als Bindemittel werden bevorzugt solche verwendet, die sich eher schlecht im jeweils verwendeten Lösemittelgemisch lösen können.

Erfindungsgemäß wird als Bindemittel in $C_1$-$C_3$ Alkylcellulose eingesetzt, wobei unter Alkyl Methyl, Ethyl oder Propyl zu verstehen ist.

Bei einer bevorzugten Ausführungsform enthält die erfindungsgemäße Tintenstrahldrucktinte als Bindemittel Ethylcellulose. Dies ist vor allem deswegen überraschend, weil Ethylcellulose ein im Tintenstrahldruckbereich sehr ungewöhnliches Bindemittel ist. Mit Ethylcellulose werden i.d.R. die besten Ergebnisse hinsichtlich Glanzausbildung der Effektpigmente erhalten.

Wird als Bindemittel Ethylcellulose verwendet, so lassen sich sogar extrem poröse Untergrundmaterialien wie Micropormaterialien erfolgreich mit Effektpigmenten bedrucken, wobei Drucke mit einer guten mechanischen Stabilität erhalten werden. Hierbei handelt es sich um ein Papier oder um eine Folie oder um eine Platte, welche mit einer porösen Schicht aus $SiO_2$ und $Al_2O_3$ beschichtet ist. Diese Beschichtung weist Poren mit extrem kleinem Durchmesser auf. Das Lösemittel der Tintenstrahldrucktinte wird unmittelbar nach dem Bedruckungsvorgang von dieser Porenstruktur aufgrund der starken Kapillarkräfte aufgenommen.

Das im Stand der Technik im Lösemittel gut gelöste Bindemittel wird natürlicherweise ebenfalls aufgesaugt und entsprechend weist das Effektpigment keine mechanische Stabilität im Druck mehr auf.

Möglicherweise hat Ethylcellulose eine erhöhte Affinität zu Effektpigmenten, insbesondere zu Aluminiumeffektpigmenten, und unterliegt daher nicht diesem Mechanismus.

Bei weiter bevorzugten Ausführungsformen weist die als Bindemittel verwendete Ethylcellulose eine durchschnittliche Molmasse $M_w$ (Massenmittel) von 50.000 bis 250.000 g/mol und bevorzugt von 80.000 bis 150.000 g/mol auf. Die Molmasse wird bevorzugt mittels GPC nach der DIN 55672, Teil 1 mit THF als Lösemittel, Polystyrolstandards und drei Säulen (Waters GmbH) mit einer Länge von je 30 cm und einem Innendurchmesser von je 7,8 mm und den Porengrößen HR5, HR4 und HR2 bestimmt.

Diese eher geringen bis mittleren Molmassen der Ethylcellulose bewirken eine bessere Löslichkeit des Bindemittels im verwendeten Lösemittel.

Bevorzugte Ausführungsformen der erfindungsgemäßen Tintenstrahldrucktinte mit einer Viskosität von 1 bis 50 mPa·s, bevorzugt von 4 bis 20 mPa·s umfassen folgende Komponenten A und/oder B:

Komponente A:

    a) Aluminiumeffektpigmente mit einer mittleren Dicke von 15 bis 50 nm und einem $d_{98}$ von unter 12 μm
    b) als Bindemittel Ethylcellulose; wobei das Gewichtsverhältnis von Aluminiumeffektpigment zu Bindemittel 2,5 bis 6,25 beträgt.

Besonders bevorzugte Ausführungsformen der Tintenstrahldrucktinte A enthalten das Bindemittel Ethylcellulose in Mengen von 0,2 bis 0,8 Gew.-%.

Komponente B:

    a) Aluminiumeffektpigmente mit einer mittleren Dicke von 15 bis 50 nm und einem $d_{98}$ von 2 bis 12 μm, bevorzugt von 2,5 bis unter 8 μm
    b) als Bindemittel Ethylcellulose; wobei das Gewichtsverhältnis von Aluminiumeffektpigment zu Bindemittel vorzugsweise 2,5 bis 6,25 beträgt und das

Bindemittel in Mengen von vorzugsweise 0,2 bis 1,0 Gew.-%, bezogen auf das Gesamtgewicht der Tintenstrahldrucktinte, enthalten ist.

Besonders bevorzugte Ausführungsformen der Tintenstrahldrucktinte B enthalten das Bindemittel Ethylcellulose mit einer mittleren Molmasse $M_w$ von 50.000 bis 250.000 g/mol.

Ein weiterer Aspekt der Erfindung betrifft die Verwendung der erfindungsgemäßen Tintenstrahldrucktinten zum Bedrucken insbesondere nicht-poröser Substrate.

Bevorzugte nicht-poröse Substrate sind hierbei unbeschichtete oder nicht-porös beschichtete Folien und Netzvinyle, Glas, Keramik, lackierte Platten, Metallplatten, Bleche, behandeltes Leder, beschichtete Künstlerleinwände sowie glänzend beschichtete Papiere.

Nicht-poröse Substrate zeichnen sich dadurch aus, dass nach dem Druckprozess das Lösemittel verdampft oder den Untergrund bestenfalls anquellen lässt oder anlöst. Die Trocknungszeiten sind dadurch i.d.R. viel länger als bei porösen Substraten, die das Lösemittel zum großen Teil oder vollständig aufnehmen können.

Beispiele unbeschichteter Folien sind Polypropylenfolien, Polyethylenfolien, Vinylfolien und Polyesterfolien einschließlich Bannermaterialien.

Beispiele lackierter Platten sind Dibond®. oder Foamboard-Produkte.

Als glänzend beschichtete Papiere werden typischerweise Tiefdruck - und Offsetpapiere eingesetzt. Diese sind im Gegensatz zu den typischen Ink Jet-Papieren nur etwas saugfähig, jedoch nicht porös.

Bevorzugt umfasst die lösemittelbasierte Tintenstrahldrucktinte einen Lösemittelanteil zwischen 50 und 99 Gew.-%, bevorzugt zwischen 75 und 98,5 Gew.-% und besonders bevorzugt zwischen 85 und 98,0 Gew.-% bezogen auf das Gesamtgewicht der Tintenstrahldrucktinte.

Vorzugsweise liegt die Verdunstungszahl des Lösemittels in einem Bereich zwischen 10 und 300, bevorzugt zwischen 20 und 250, weiter bevorzugt zwischen 80 und 200. Die Verdunstungszahl ist definiert nach DIN 53170 relativ zu Ether bei 20°C.

Als Lösemittel oder Lösemittelgemisch kann jedes zum Tintenstrahldruck geeignete Lösemittel eingesetzt werden. Bevorzugte Lösemittel sind Alkohole, Ester, Ether, Thioether, Glykolether, Glykoletheracetate, Amine, Amide, Ketone und/ oder Kohlenwasserstoffe oder Mischungen hiervon.

Beispiele für Alkohole sind Alkylalkohole wie z.B. Methanol, Ethanol, Propanol, Isopropanol, Butanol, Pentanol, Hexanol, fluorierte Alkohole oder Mischungen hiervon.

Beispiele für Ketone als Lösemittel sind Aceton, Methylethylketon, Cyclohexanon, Diisobutylketon, Methylpropylketon, Diacetonalkohol oder Mischungen hiervon.

Beispiele für Ester sind Methylacetat, Ethylacetat, 1-Methoxy-2-propylacetat, Propylacetat, Ethoxypropylacetat, Butylacetat, Methylpropionat oder Ethylpropionat, Glykoletheracetate, Butylglykolacetat, Propylenglykoldiacetat, Ethyllactat oder Mischungen hiervon.

Beispiele für Ether als Lösemittel sind Diethylether, Dipropylether, Tetrahydrofuran, Dioxan, Ethylenglykolether, insbesondere Ethylenglykolethylether oder Ethylenglykolmethylether, Methoxypropanol, Dipropylenglykoldimethylether, 3-Methoxy-3-methyl-1-butanol, Propylenglykolbutylether oder Mischungen hiervon.

Beispiele für Amide als Lösemittel sind *N*-Methylpyrrolidon und 2-Pyrrolidon.

Die Kohlenwasserstoffe können aus der Gruppe ausgewählt werden, die aus Terpenen, wie Pinen, Limonen, Terpinolen, aliphatischen Kohlenwasserstoffen wie Heptan, Testbenzin, "Stoddard Solvent" und/oder aromatischen Kohlenwasserstoffen wie Toluol, Xylol, Solvent Naphta oder Mischungen hiervon besteht.

Insbesondere werden geeignete Lösemittel aus der Gruppe bestehend aus Alkoholen, Glykolethern, Estern, Ketonen oder Mischungen hiervon ausgewählt. Unter Lösemittel wird im Sinne der Erfindung ein einzelnes Lösemittel oder ein Lösemittelgemisch verstanden.

Besonders bevorzugte Lösemittel sind Isopropanol, Ethanol, Butanol, Diisobutylketon, Butylglykol, Butylglykolacetet, Propylenglykoldiacetat, Dipropylenglykoldimethylether, Ethyllacetat, Ethoxypropylacetat oder 3-Methoxy-3-Methyl-1-Butanol.

Vorzugsweise enthält das organische Lösemittel oder Lösemittelgemisch kein Wasser. Geringfügige Mengen an Wasser, die beispielsweise als technische Verunreinigung enthalten sind, stören nicht oder nur unwesentlich. Vorzugsweise liegt der Anteil an Wasser bei weniger als 20 Gew.-%, weiter bevorzugt bei weniger als 10 Gew.-%, noch weiter bevorzugt bei weniger als 5 Gew.-%. Äußerst bevorzugt liegt der Anteil an Wasser bei weniger als 2 Gew.-%, wobei sich diese Angaben jeweils auf das Gesamtgewicht des Lösemittels bzw. Lösemittelgemisches beziehen.

Bei einer weiteren Ausführungsform ist es bevorzugt, dass das Lösungsmittel bzw. Lösungsmittelgemisch in Tintenstrahltinten, die in der drop-on-demand" (DOD) Technologie eingesetzt werden, einen Flammpunkt von mindestens 61°C oder darüber besitzen. Somit wird gewährleistet, dass die Druckmaschinen nicht in einem explosionsgeschützten Bereich stehen oder explosionsgeschützt ausgeführt sein müssen. Weiterhin sind die Lagerung und der Transport einer derartigen Tintenstrahldrucktinte sicherer.

Bei einer weiteren Ausführungsform der Erfindung hat die Tintenstrahldrucktinte eine Oberflächenspannung von 18 bis 50 mN/m, bevorzugt von 20 bis 40 mN/m und besonders bevorzugt von 22 bis 35 mN/m.

Liegt die Oberflächenspannung unter 18 mN/m kann die Tintenstrahldrucktinte über die Oberfläche des Druckkopfes fließen, was zu Schwierigkeiten beim Ausstoß der Tintentröpfchen führt. Außerdem kann die Tinte auf dem zu bedruckenden Substrat verlaufen, was sich in einem schlechten Druckbild äußert. Liegt die Oberflächenspannung über 50 mN/m, kann das zu bedruckende Substrat nicht benetzt werden und die Tinte verläuft nicht auf dem zu bedruckenden Substrat.

Vorzugsweise umfasst die Tintenstrahldrucktinte zusätzlich Additive, wie z.B. Dispergiermittel, Antiabsetzmittel, Feuchthaltemittel, Netzmittel einschließlich Antikrater- oder Verlaufsadditive, Biozide, pH-Einstellmittel, Weichmacher, UV-Schutzmittel oder Mischungen davon.

Die Dispergiermittel helfen eine homogene Verteilung aller festen Bestandteile in der Tintenstrahltinte zu erzielen. Insbesondere wird eine mögliche Agglomeration der Perlglanzpigmente vermieden.

Die erfindungsgemäße Zusammensetzung der Tintenstrahldrucktinte kann ein Dispergiermittel enthalten. Als Dispergiermittel können alle gängigen Dispergiermittel verwendet werden, welche in einer gewöhnlichen Drucktinte, insbesondere Tintenzusammensetzung, wie einer Tiefdrucktinte, Offsettinte, Intagliotinte oder Siebdrucktinte benutzt werden. Als Dispersionsmittel können handelsübliche Produkte verwendet werden. Beispiele hierfür umfassen Solsperse 20000, 24000, 30000, 32000, 32500, 33500, 34000 und 35200 (Fa. Avecia K.K.) oder Disperbyk-102, 106, 111, 161, 162, 163, 164, 166, 180, 190, 191 und 192 (Fa. BYK-Chemie GmbH).

Bei einer weiteren Ausführungsform enthalten die erfindungsgemäßen Tintenstrahldrucktinten der vorliegenden Erfindung Antiabsetzmittel. Diese Substanzen sollen das Absetzen der plättchenförmigen Effektpigmente in der Tintenstrahltinte verhindern. Beispiele hierfür sind Byk-405 in Verbindung mit pyrogenem Siliziumdioxid, modifizierten Harnstoffen wie Byk-410 und Byk-411 oder Wachsen wie Byk Ceramat 237, Ceramat 250, Cerafak 103, Cerafak 106 oder Ceratix 8461.

Gemäß einer weiteren bevorzugten Ausführungsform enthält die erfindungsgemäße Tintenstrahldrucktinte Netzmittel.

Netzmittel dienen dazu die Benetzung des zu bedruckenden Substrats zu verbessern. Netzmittel sind weiterhin wichtig für die Funktion des Druckkopfs, da auch interne Strukturen, wie beispielsweise Kanäle, Filter, Düsenvorkammern etc. benetzt werden. Beispiele geeigneter Netzmittel umfassen Fettsäurealkylether, Acetylenderivate, fluorierte Ester, fluorierte Polymere oder Silikonverbindungen.

Biozide können in die erfindungsgemäße Tintenstrahldrucktinte eingearbeitet werden, um ein Wachstum von Mikroorganismen zu verhindern. Verwendet werden können z.B. Polyhexamethylenbiguanide, Isothiazolone, Isothiazolinone, wie z.B. 5-Chloro-2-methyl-4-isothiazolin-3-on (CIT), 2-Methyl-4-isothiazolin-3-on (MIT), etc. oder Mischungen davon.

Ammoniak oder Amine wie Triethanolamin oder Dimethylethanolamin können der Tintenstrahldrucktinte zur Einstellung des pH-Wertes zugeben werden.

Als Weichmacher können beispielsweise Zitronensäureester, Adipinsäureester, Phosphorsäureester und höhere Alkohole der Tintenstrahldrucktinte zugesetzt werden.

Beispielsweise kann 2,6-Di-tert-Butylphenol als UV-Schutzmittel der erfindungsgemäßen Tintenstrahldrucktinte zugegeben werden.

Die Tintenstrahldrucktinte der vorliegenden Erfindung kann auf unterschiedliche zu bedruckende Substrate aufgebracht werden. Vorzugsweise wird das Substrat aus der Gruppe ausgewählt, die aus beschichtetem oder unbeschichtetem Papier oder Pappe, polymeren Substraten (Plastik), Metallen, Keramik, Glas, Textilien, Leder und aus Kombinationen davon besteht. Die am meisten bevorzugten Substrate bestehen aus polymeren Substraten (Plastik), wie Kunststofffolien (z.B. PVC- oder PE-Folien).

Die Tintenstrahldrucktinte gemäß der vorliegenden Erfindung kann bei jeder möglichen Tintenstrahl-Technologie benutzt werden mit der Ausnahme von UV-Systemen. Die erfindungsgemäße Tintenstrahltinte kann in verschiedenen Tintenstrahldrucksystemen eingesetzt werden. Einerseits kann es sich bei den Tintenstrahldrucksystemen um Systeme handeln, bei denen Tropfen elektrostatisch aufgeladen und abgelenkt werden (continuous ink jet-Verfahren). Andererseits können Tintenstrahldrucksysteme verwendet werden, in denen Tropfen durch Druckwellen gebildet werden, die von piezoelektrischen Elementen erzeugt werden (drop-on-demand-Verfahren).

Vorzugsweise wird die Tintenstrahldrucktinte der vorliegenden Erfindung mit der continuous ink jet - CIJ - oder impulse oder Piezo-drop-on-demand - DOD - Tintenstrahltechnologie benutzt.

Eine Auflösung von mindestens 300 dpi wird standardmäßig zur Gewährleistung einer guten Druckqualität vorausgesetzt.

Die der Erfindung zugrunde liegende Aufgabe wird des Weiteren auch durch einen Gegenstand, der mit der erfindungsgemäßen Tintenstrahldruckfarbe bedruckt ist, gelöst. Bei dem Gegenstand handelt es sich insbesondere um die oben genannten Substrate, wie Folien, Papiere, Pappen, Tafeln, Glas, Keramik, Platten, Bleche, Leder, etc.

Die nachfolgenden Beispiele erläutern die Erfindung näher, ohne sie jedoch zu beschränken.


**A Tintenstrahldrucktintenrezepturen**

Es wurden drei verschiedene Tintenrezepturen ausgearbeitet. Je nach dem eingesetzten Pigment/Bindemittelverhältnis handelt es sich hierbei um erfindungsgemäße Beispiele oder um Vergleichsbeispiele.


**Tintenstrahldrucktintenrezeptur 1:**

- Propylenglykoldiacetat:     37 Gew.-%
- Butylglykolacetat:     20 Gew.-%
- Dipropylenglykoldimethylether:     12,7 Gew.-%

- Ethoxypropylacetat: 20 Gew.-%
- Fluorad-FC4430: 0,3 Gew.-%
- Ethlycellulose N200:* 0,4 Gew.-%
- Aluminiumeffektpigmentdispersion:** 12 Gew.-%

(10 Gew.-% Aluminiumgehalt, bezogen auf das Gesamtgewicht der Aluminiumeffektpigmentdispersion, Eckart)

* Ethylcellulose N200 wies ein Molekulargewicht $M_w$ von 116.000 g/mol auf. Gemessen mittels GPC unter Verwendung der DIN 55672, Teil 1 mit THF als Lösemittel, Polystyrolstandards und drei Säulen (Waters GmbH) mit einer Länge von je 30 cm und einem Innendurchmesser von je 7,8 mm und den Porengrößen HR5, HR4 und HR2.

** Hierbei wurde ein PVD-Aluminiumeffektpigment, welches nach der in der WO 2009/083176 A1, Beispiel 2 beschriebenen Weise durch einen Mahlvorgang auf die gewünschte Teilchengröße ($D_{50}$ = 1,8 μm) gebracht wurde, verwendet.

**Tintenstrahldrucktintenrezeptur 2:**

- Lösemittelgemisch: 87,3 Gew.-% bis 65,7 Gew.-% bestehend aus

| | |
|---|---|
| Propylenglykoldiacetat | 34,4 Gew.-% |
| 1-Butoxy-2-propanol | 40,4 Gew.-% |
| Dipropylenglykoldimethylether | 13,7 Gew.-% |
| Ethoxypropylacetat | 11,5 Gew.-% |

- Fluorad-FC4430: 0,3 Gew.-%
- Verschiedene Bindemittel: (s. Tab. 2) 0,4 Gew.-% - 4,0 Gew.-%
- Aluminiumeffektpigmentdispersion:* 12 Gew.-% - 30 Gew.-%

(10 Gew.-% Aluminiumgehalt, bezogen auf das Gesamtgewicht der Aluminiumeffektpigmentdispersion, Eckart)* Wie aus Tintenrezeptur 1.

Beträgt die Konzentration der Aluminiumeffektpigmentdispersion mehr als 12 % und/oder die Bindemittelkonzentration mehr als 0,4%, so wird entsprechend die Konzentration des Lösemittelgemischs angepasst, wobei seine Zusammensetzung nicht verändert wird.

**Tintenstrahldrucktintenrezeptur 3:**

- Lösemittelgemisch: 68,75 Gew.-% bestehend aus

| | |
|---|---|
| Dipropylenglykoldimethylether | 52,4 Gew.-% |
| 1-Butoxy-2-Propanol | 47,6 Gew.-% |
| Byk 340: | 0,25 Gew.-% |

- Verschiedene Bindemittel: (s. Tab. 3) 1 Gew.-% bis 8,2 Gew.-%
- Aluminiumeffektpigmentdispersion:* 30 Gew.-%

(10 Gew.-% Aluminiumgehalt, bezogen auf das Gesamtgewicht der Aluminiumeffektpigmentdispersion, Eckart)* Wie aus Tintenrezeptur 1.

Beträgt die Konzentration der Bindemittel mehr als 1 %, so wird entsprechend die Konzentration der Lösemittel angepasst, wobei jedoch die Zusammensetzung des Lösemittelgemisches nicht verändert wird.

Alle Angaben verstehen sich als Gew.-%, bezogen jeweils auf das Gesamtgewicht der Tintenstrahldrucktinte, sofern nicht anders angegeben.

Von Tintenstrahldrucktinte wurde jeweils 100 g hergestellt.

**B Anwendungsbeispiele:**

**Anwendungsbeispiele 1 a) - c):**

Die Tintenstrahldrucktinten 1 bis 3 aus Abschnitt A wurden in einem digitalen Großformatdrucker von der Fa. Mimaki (Modell JV3-160S) verdruckt.

Es wurden mit Hilfe des mit dieser Druckmaschine üblichen 100%-Flächendrucktests Streifen von 50 x 400 mm auf verschiedenen gängigen Substraten hergestellt. Die Glanzwerte der Drucke wurden mit einem Micro-Tri-Gloss Glanzmessgerätes der Fa. Byk Gardner bei einem Messwinkel von 60° vermessen. Die Wischfestigkeit wurde manuell geprüft und nach einem 3-Stufensystem beurteilt.

Im Testmenü des Druckers wurden folgende Einstellungen gewählt:

Anteil des maximalen Tintenauftrags: 100%
Auflösung: 720dpi
Vorschubschritte: 16 Pass
Direktionale Druckkopfbewegung: Bi
Vorschubgeschwindigkeit: High speed = off, d.h. Normalgeschwindigkeit

Die Temperatur der Trocknungseinrichtung wurde auf 50°C im Einzugs- und 45°C im Druckbereich gesetzt.

**Tabelle 1: Bindemittel und Glanzwerte Tintenrezeptur 1**

| Proben | Substrat | Glanzwert 60° | Wischfestigkeit |
|--------|----------|---------------|-----------------|
| Beispiel 1a | Igepa Master Screen Self Adhesive Vinyl | 404 | Akzeptabel |
| Beispiel 1b | Melinex 400 Polyester Film | 506 | Akzeptabel |
| Beispiel 1c | Sihl Maranello Photo Papier | 561 | Gut |

Alle Beispiele weisen hohe Glanzwerte und akzeptable bis gute Wischfestigkeit auf. Dabei handelt es sich bei dem Sihl Maranello Photo Papier um ein poröses Substrat, während die beiden anderen Substrate keine Porosität aufweisen. Aus diesem Grund wird im Druck im Fall von Beispiel 1 c ein höheres tatsächliches Effektpigment/Bindemittelverhältnis vorliegen als bei den anderen Beispielen. Der höhere Glanz von Beispiel 1c ist vermutlich hierauf zurückzuführen. Überraschenderweise weisen jedoch auch die Drucke der Beispiele 1a und 1b einen hohen Glanz und eine akzeptable Wischfestigkeit auf.

**Anwendungsbeispiel 2b):**

Gemäß der Tintenstrahldrucktintenrezeptur 2 wurden durch Wahl verschiedenster Bindemittel und unterschiedlicher Pigment/Bindemittelkonzentrationen (s. Tabelle 2) verschiedene Vergleichsbeispiele und erfindungsgemäße Beispiele hergestellt. Diese wurden in einem digitalen Großformatdrucker von der Fa. Mimaki (Modell JV3-160S) verdruckt.

Es wurden gemischte Postermotive mit unterschiedlichen Anteilen an Metallicfarben in praxisüblichen Einstellungen gedruckt.

Hierbei wurden zwei typische Druckereinstellungen gewählt:

|  | a) | b) |
|--|-----|-----|
| Auflösung: | 720dpi | 360x540dpi |
| Vorschubschritte: | 8 Pass | 6 Pass |
| Vorschubgeschwindigkeit:: | High Speed | High Speed |
| Direktionale Druckkopfbewegung: | Bi | Bi |

Im über mehrere Wochen hinweg mehrstündigen Druckbetrieb kam es zu keinen Störungen im Betrieb des Druckers.

Mithin traten keine Verstopfungen des Druckkopfes auf.

Weiterhin wurden gemäß der Tintenstrahldrucktintenrezeptur 2 durch Wahl verschiedenster Bindemittel und unterschiedlicher Pigment/Bindemittelkonzentrationen die verschiedenen Vergleichsbeispiele und erfindungsgemäße Beispiele hergestellt und unter den Bedingungen der Anwendungsbeispiele 1 auf Igepa Masterscreen permanent (Selbstklebevinylfolie) als Substrat verdruckt. Dieses Substrat ist nicht porös.

**Tabelle 2: Rezepturbestandteile der Tintenrezeptur 2, Glanzwerte und Reibtestwerte**

| Probe | Gehalt Al-Pigment in Gew.-% | Art Bindemittel (BM) | Handelsname BM / Hersteller | Gehalt BM in Gew.-% | Al/BM | Glanz 60° | Ergebnis Reibtest (PVC) |
|---|---|---|---|---|---|---|---|
| Vergl.-Beispiel 2a | 3,0 | PVC/PVAc Copo | Vinylite VYHH (Dow Chemical) | 2,7 | 1,1 | 140 | akzeptabel |
| Vergl.-Beispiel 2b | 1,2 | PVB | Pioloform BN18 (Wacker Chemie) | 4,0 | 0,3 | 80 | akzeptabel |
| Vergl.-Beispiel 2c | 1.2 | Acrylat | Joncryl 661 (Johnson Polymer) | 4,0 | 0,3 | 70 | akzeptabel |
| Vergl.-Beispiel 2d | 1,2 | PVC/PVAc Copo | Vinylite VYHH (Dow Chemical) | 2,7 | 0,4 | 95 | gut |
| Vergl.-Beispiel 2e | 1,2 | PVC/PVAc Copo | Vinylite VYHH (Dow Chemical) | 2.0 | 0,6 | 110 | gut |
| Referenz Beispiel 2a | 1,2 | CAB | CAB 551 (Eastman) | 0,5 | 2,4 | 230 | schlecht |
| Vergl.-Beispiel 2q | 1,2 | PVC/PVAc Copo | Vinylite VYHH (Dow Chemical) | 2,0 | 0,6 | 130 | qut |
| Vergl.-Beispiel 2h | 1,2 | CAB | CAB 551 (Eastman) | 1,0 | 1,2 | 216 | schlecht |
| Beispiel 2b | 1,2 | Ethlycellulose N200 | Ethocel 200 (Dow Chemical) | 0,4 | 3,0 | 404 | akzeptabel |

Die Vergleichsbeispiele mit niedrigem Effektpigment/Bindemittel-Verhältnis weisen durchweg niedrigere Glanzwerte auf als das erfindungsgemäße Beispiel 2b. Tatsächlich scheint der Glanzwert in etwa linear mit dem Effektpigment/Bindemittel-Verhältnis anzusteigen. Die mechanischen Eigenschaften des Beispiels 2b waren trotz des niedrigen Bindemittelanteils überraschenderweise akzeptabel.

**Anwendungsbeispiele 3:**

Gemäß der Tintenstrahldrucktintenrezeptur 3 wurden durch Wahl verschiedenster Bindemittel und unterschiedlicher Pigment/Bindemittelkonzentrationen (s. Tabelle 3) verschiedene Vergleichsbeispiele und erfindungsgemäße Beispiele hergestellt. Diese Tintenstrahldrucktinten wurden jeweils mit einem feststehenden Druckkopf verdruckt.

Die Tinten wurden in einem Gefäß vorgelegt und von dort aus in das Tintenversorgungssystem eines Tintenstrahldruckkopfes gepumpt. Die Druckkopftemperatur wurde auf 30° C eingestellt, um die erforderliche Viskosität von 8-20 mPa*s zu erreichen.

| | |
|---|---|
| Druckkopf: | Dimatix Spectra Nova PH 256/80AAA |
| Tintenversorgungssystem: | Spectra Apollo II Print head support kit |
| Bedingungen: | Kopftemperatur 40° C |
| | Tropfenerzeugungsfrequenz 5 kHz |
| | Auflösung: 300dpi |
| | Betriebsspannung 100V |
| | Wellenform 6/2/2$\mu$s |
| Testform: | 100% Jet pattern, all nozzles, 15 Minuten Dauerbetrieb |

Es wurden in allen Fällen keine Düsenausfälle festgestellt.

Weiterhin wurden die Tintenstrahldrucktinten auf Igepa Master Screen Selbstklebevinyl als nicht-porösem Substrat aufgedruckt.

**Tabelle 3: Rezepturbestandteile der Tintenrezeptur 3 und Glanzwerte Dimatix-Versuche**

| Probe | Gehalt Al-Pigment in Gew.-% | BM | Gehalt BM in Gew.-% | Handelsname BM / Hersteller | Al/BM | Glanz 60° | Reib (PVC) |
|---|---|---|---|---|---|---|---|
| Vergl.- Beispiel 3a | 3,0 | PVB | 8,2 | Pioloform BN18 (Wacker Chemie) | 0,4 | 77 | gut |
| Vergl.-Beispiel 3b | 3,0 | PVC/PVAc Copo | 4,7 | Vinylite VYHH (Dow Chemical) | 0,6 | 110 | gut |
| Beispiel 3 | 3,0 | Ethylcellulose N200 | 1,0 | Ethocel 200 (Dow Chemical | 3,0 | 320 | akzeptabel |

Der Glanzwert des Ausdrucks auf Igepa Master Screen Selbstklebevinyl lag bei 320. Die generell niedrigeren Glanzwerte gegenüber dem Mimaki-System sind auf die wesentlich geringere Auflösung und das größere Tropfenvolumen (Dimatix: 80pl, Mimaki: 4pl) des Dimatix-Druckkopfes zurückzuführen.
Viele geringere Glanzwerte weisen die Vergleichsbeispiele 3a und 3b auf, bei denen sehr viel geringere Pigment/Bindemittel-Verhältnisse eingesetzt wurden.

**Patentansprüche**

1. Tintenstrahldrucktinte enthaltend Effektpigmente, Bindemittel und organische(s) Lösemittel oder Lösemittelgemisch, **dadurch gekennzeichnet,** **dass** die Effektpigmente

   a) Aluminiumeffektpigmente mit einer mittleren Dicke aus einem Bereich von 10 bis 100 nm, einem $d_{50}$-Wert der Summenhäufigkeitsverteilung der volumengemittelten Größenverteilungsfunktion von wenigstens 1 $\mu$m und mit einem $d_{98}$-Wert der Summenhäufigkeitsverteilung der volumengemittelten Größenverteilungsfunktion von weniger als 15 $\mu$m und/oder
   b) Perlglanzpigmente mit einem $d_{90}$-Wert der Summenhäufigkeitsverteilung der volumengemittelten Größenverteilungsfunktion aus einem Bereich von 3,5 bis 15 $\mu$m, enthalten

   und **dass** die Tintenstrahldrucktinte eine Viskosität aus einem Bereich von 1 bis 50 mPa*s und ein Gewichtsverhältnis von Effektpigment zu Bindemittel von 2 bis 15 aufweist, wobei das Bindemittel $C_1$-$C_3$ Alkylcellulose ist und wobei die mittlere Dicke der Aluminiumeffektpigmente durch Messung anhand von Rasterelektronenmikroskopie-Bildern erfolgt,
   wobei die $d_{50}$-, $d_{90}$- und $d_{98}$-Werte mittels Lasergranulometrie auf Grundlage der Fraunhoferbeugungstheorie gemessen werden und
   wobei die Viskosität der Tintenstrahldrucktinte mit einem R/S Rheometer der Fa. Brookfield mit einem Doppelspalt-Zylinder Meßsystem nach DIN 54453 bei 150 rpm und 25°C gemessen wird.

2. Tintenstrahldrucktinte nach Anspruch 1 **dadurch gekennzeichnet,** **dass** die Aluminiumeffektpigmente und/oder die Perlglanzpigmente in einer Konzentration von 0,2 bis 7 Gew.-%, bezogen auf das Gesamtgewicht der Tintenstrahldrucktinte, vorliegen.

3. Tintenstrahldrucktinte nach einem der vorstehenden Ansprüche **dadurch gekennzeichnet,** **dass** das Bindemittel in Mengen von 0,1 bis 1,3 Gew.-%, bezogen auf das Gesamtgewicht der Tintenstrahldrucktinte, enthalten ist.

4. Tintenstrahldrucktinte nach einem der vorhergehenden Ansprüche

**dadurch gekennzeichnet,**
**dass** die Tintenstrahldrucktinte als Bindemittel Ethylcellulose enthält.

5. Tintenstrahldrucktinte nach Anspruch4,
**dadurch gekennzeichnet,**
**dass** die Ethylcellulose eine durchschnittliche Molmasse $M_W$ von 50.000 bis 250.000 g/mol aufweist, wobei die Molmasse mittels GPC nach DIN 55672, Teil 1 mit THF als Lösemittel, Polystyrolstandards und drei Säulen mit einer Länge von je 30 cm und einem Innendurchmesser von je 7,8 cm und den Porengrößen HR 5, HR 4 und HR 2 bestimmt wird.

6. Tintenstrahldrucktinte nach einem der vorstehenden Ansprüche
**dadurch gekennzeichnet,**
**dass** das Lösemittel oder Lösemittelgemisch eine Verdunstungszahl nach DIN 53170 relativ zu Ether bei 20°C aus einem Bereich von 10 bis 300 aufweist.

7. Tintenstrahldrucktinte nach einem der vorstehenden Ansprüche
**dadurch gekennzeichnet,**
**dass** die Aluminiumeffektpigmente einen $d_{98}$-Wert von weniger 12 $\mu$m aufweisen.

8. Tintenstrahldrucktinte nach einem der Ansprüche 1 bis 7
**dadurch gekennzeichnet,**
**dass** die Aluminiumeffektpigmente PVD-Aluminiumeffektpigmente sind.

9. Tintenstrahldrucktinte nach einem der vorstehenden Ansprüche
**dadurch gekennzeichnet,**
**dass** die Aluminiumeffektpigmente eine mittlere Dicke $h_{50}$ aus einem Bereich von 15 bis 50 nm aufweisen.

10. Tintenstrahldrucktinte nach einem der Ansprüche 1 bis 6
**dadurch gekennzeichnet,**
**dass** die Perlglanzpigmente einen $d_{90}$-Wert der Summenhäufigkeitsverteilung der volumengemittelten Größenverteilungsfunktion aus einem Bereich von 4 bis 13 $\mu$m aufweisen.

11. Tintenstrahldrucktinte nach einem der vorstehenden Ansprüche
**dadurch gekennzeichnet,**
**dass** die Tintenstrahldrucktinte eine Viskosität aus einem Bereich von 3 bis 30 mPa*s aufweist.

12. Tintenstrahldrucktinte nach einem der vorstehenden Ansprüche
**dadurch gekennzeichnet,**
**dass** die Tintenstrahldrucktinte eine Oberflächenspannung aus einem Bereich von 18 - 50 mN/m aufweist, wobei die Oberflächenspannung bei einer Temperatur von 25°C mit der du Nouy Ring-Methode erfolgt.

13. Tintenstrahldrucktinte nach einem der vorstehenden Ansprüche
**dadurch gekennzeichnet,**
**dass** die Tintenstrahldrucktinte eine Leitfähigkeit von 0,2 bis 5 mS/cm aufweist, wobei die Leitfähigkeit bei einer Temperatur von 25°C gemäß DIN 53779 gemessen wird.

14. Verwendung der Tintenstrahldrucktinte nach einem der vorstehenden Ansprüche zum Bedrucken eines Substrates.

15. Verwendung der Tintenstrahldrucktinte nach einem der Ansprüche 1 bis 13 zum Bedrucken eines nicht-porösen Substrats.

16. Gegenstand,
**dadurch gekennzeichnet,**
**dass** der Gegenstand mit einer Tintenstrahldrucktinte nach einem der Ansprüche 1 bis 13 bedruckt ist.

**Claims**

1. Inkjet printing ink containing effect pigments, binding agent and organic solvent(s) or a solvent mixture, **characterised in that**
the effect pigments contain

    a) aluminium effect pigments with a mean thickness in a range of from 10 to 100 nm, a $d_{50}$ value for the cumulative frequency distribution of the volume-averaged size distribution function of least 1 $\mu$m and with a $d_{98}$ value for the cumulative frequency distribution of the volume-averaged size distribution function of less than 15 $\mu$m and/or
    b) pearlescent pigments with a $d_{90}$ value for the cumulative frequency distribution of the volume-averaged size distribution function of least 1 $\mu$m in a range of 3.5 to 15 $\mu$m,

and the inkjet printing ink has a viscosity in a range of from 1 to 50 mPa*s and a weight ratio of effect pigments to binding agent of 2 to 15, and the binding agent is $C_1$-$C_3$ alkyl cellulose, and the mean thickness of the aluminium effect pigments is determined by taking measurements using scanning electron microscopy images,
and the $d_{50}$, $d_{90}$ and $d_{98}$ values are measured by means of laser granulometry on the basis of Fraunhofer's diffraction theory, and
the viscosity of the inkjet printing ink is measured with an R/S rheometer made by the Brookfield company with a double gap-cylinder measuring system conforming to DIN 54453 at 150 rpm and 25°C.

2. Inkjet printing ink as claimed in claim 1,
**characterised in that**
the aluminium effect pigments and/or pearlescent pigments are present in a concentration of 0.2 to 7 % by weight relative to the total weight of the inkjet printing ink.

3. Inkjet printing ink as claimed in one of the preceding claims,
**characterised in that**
the binding agent is present in quantities of 0.1 to 1.3 % by weight relative to the total weight of the inkjet printing ink.

4. Inkjet printing ink as claimed in one of the preceding claims,
**characterised in that**
the inkjet printing ink contains ethyl cellulose as a binding agent.

5. Inkjet printing ink as claimed in claim 4,
**characterised in that**
the ethyl cellulose has an average molecular weight Mw of 50,000 to 250,000 g/mol, and the molecular weight is determined by means of GPC in accordance with DIN 55672, Part 1, using THF as a solvent, polystyrene standards, and three columns with a length of 30 cm each and an internal diameter of 7.8 cm each and pore sizes HR 5, HR 4 and HR 2.

6. Inkjet printing ink as claimed in one of the preceding claims,
**characterised in that**
the solvent or solvent mixture has an evaporation number in accordance with DIN 53170 relative to ether at 20°C in a range of from 10 to 300.

7. Inkjet printing ink as claimed in one of the preceding claims,
**characterised in that**
the aluminium effect pigments have a $d_{98}$ value of less than 12 $\mu$m.

8. Inkjet printing ink as claimed in one of claims 1 to 7,
**characterised in that**
the aluminium effect pigments are PVD aluminium effect pigments.

9. Inkjet printing ink as claimed in one of the preceding claims,
**characterised in that**
the aluminium effect pigments have a mean thickness $h_{50}$ in a range of from 15 to 50 nm.

10. Inkjet printing ink as claimed in one of claims 1 to 6,

**characterised in that**
the pearlescent pigments have a $d_{90}$ value for the cumulative frequency distribution of the volume-averaged size distribution function in a range of from 4 to 13 μm.

11. Inkjet printing ink as claimed in one of the preceding claims,
**characterised in that**
the inkjet printing ink has a viscosity ina range of from 3 to 30 mPa*s.

12. Inkjet printing ink as claimed in one of the preceding claims,
**characterised in that**
the inkjet printing ink has a surface tension in a range of 18 - 50 mN/m, and the surface tension is determined at a temperature of 25°C using the du Noüy ring method.

13. Inkjet printing ink as claimed in one of the preceding claims,
**characterised in that**
the inkjet printing ink has a conductivity of from 0.2 to 5 mS/cm, and the conductivity is measured at a temperature of 25°C in accordance with DIN 53779.

14. Inkjet printing ink as claimed in one of the preceding claims for printing a substrate.

15. Use of the inkjet printing ink as claimed in one of claims 1 to 13 for printing a non-porous substrate.

16. Object,
**characterised in that**
the object is printed with an inkjet printing ink as claimed in one of claims 1 to 13.


**Revendications**

1. Encre d'imprimante à jet d'encre contenant des pigments à effet, des liants et un ou plusieurs solvant(s) ou un mélange de solvants,
**caractérisée en ce que**
les pigments à effet contiennent

   a) des pigments à effet d'aluminium avec une épaisseur totale dans l'intervalle de 10 à 100 nm, une valeur $d_{50}$ de la répartition somme de fréquence de la fonction de répartition de taille par moyenne de volume d'au moins 1 μm et avec une valeur $d_{98}$ de la répartition somme de fréquence de la fonction de répartition de taille par moyenne de volume de moins de 15 μm et/ou
   b) des pigments perlés avec une valeur $d_{90}$ de la répartition somme de fréquence de la fonction de répartition de taille par moyenne de volume dans un intervalle de 3,5 à 15 μm,

   et **en ce que** l'encre d'imprimante à jet d'encre présente une viscosité dans un intervalle de 1 à 50 mPa*s et un rapport pondéral des pigments à effet au liant de 2 à 15, sachant que le liant est de l'alkyl(en $C_1$ à $C_3$)cellulose et que l'épaisseur moyenne des pigments à effet d'aluminium s'effectue par mesure au vu d'images obtenues par microscopie électronique à balayage,
   les valeurs $d_{50}$, $d_{90}$ et $d_{98}$ étant mesurées par granulométrie au laser sur la base de la théorie de la diffraction de Fraunhofer et
   la viscosité de l'encre d'imprimante à jet d'encre étant mesurée avec un rhéomètre R/S de la société Brookfield avec un système de mesure à cylindre à double fente selon DIN 54453 à 150 tr/min et 25 °C.

2. Encre d'imprimante à jet d'encre selon la revendication 1,
**caractérisée en ce que**
les pigments à effet d'aluminium et/ou les pigments perlés sont présents en une concentration de 0,2 à 7 % en poids, rapportée au poids total de l'encre d'imprimante à jet d'encre.

3. Encre d'imprimante à jet d'encre selon l'une quelconque des revendications précédentes,
**caractérisée en ce que**
le liant est contenu en des quantités de 0,1 à 1,3 % en poids, rapportées au poids total de l'encre d'imprimante à jet d'encre.

4. Encre d'imprimante à jet d'encre selon l'une quelconque des revendications précédentes, **caractérisée en ce que** l'encre d'imprimante à jet d'encre contient comme liant de l'éthylcellulose.

5. Encre d'imprimante à jet d'encre selon la revendication 4, **caractérisée en ce que** l'éthylcellulose présente une masse molaire moyenne $M_W$ de 50.000 à 250.000 g/mol, la masse molaire étant déterminée par GPC selon DIN 55672, partie 1, avec du THF comme solvant, les standards polystyrène et trois colonnes d'une longueur de 30 cm chacune et d'un diamètre intérieur de 7,8 cm chacune et les grandeurs de pores HR 5, HR 4 et HR2.

6. Encre d'imprimante à jet d'encre selon l'une quelconque des revendications précédentes, **caractérisée en ce que** le solvant ou le mélange de solvants présente un indice d'évaporation selon DIN 53170, à 20 °C par rapport à l'éther, dans un intervalle de 10 à 300.

7. Encre d'imprimante à jet d'encre selon l'une quelconque des revendications précédentes, **caractérisée en ce que** les pigments à effet aluminium présentent une valeur $d_{98}$ de moins de 12 $\mu$m.

8. Encre d'imprimante à jet d'encre selon l'une quelconque des revendications 1 à 7, **caractérisée en ce que** les pigments à effet aluminium sont de pigments à effet aluminium PVD.

9. Encre d'imprimante à jet d'encre selon l'une quelconque des revendications précédentes, **caractérisée en ce que** les pigments à effet aluminium présentent une épaisseur moyenne $h_{50}$ dans un intervalle de 15 à 50 nm.

10. Encre d'imprimante à jet d'encre selon l'une quelconque des revendications 1 à 6, **caractérisée en ce que** les pigments perlés présentent une valeur $d_{90}$ de la répartition somme de fréquence de la fonction de répartition de taille par moyenne de volume dans un intervalle de 4 à 13 $\mu$m.

11. Encre d'imprimante à jet d'encre selon l'une quelconque des revendications précédentes, **caractérisée en ce que** l'encre d'imprimante à jet d'encre présente une viscosité dans un intervalle de 3 à 30 mPa*s.

12. Encre d'imprimante à jet d'encre selon l'une quelconque des revendications précédentes, **caractérisée en ce que** l'encre d'imprimante à jet d'encre présente une tension superficielle dans un intervalle de 18 à 50 mN/m, la tension superficielle étant mesurée à une température de 25 °C par la méthode de l'anneau de du Nouy.

13. Encre d'imprimante à jet d'encre selon l'une quelconque des revendications précédentes, **caractérisée en ce que** l'encre d'imprimante à jet d'encre présente une conductivité de 0,2 à 5 mS/cm, la conductivité étant mesurée selon DIN 53779 à une température de 25 °C.

14. Utilisation de l'encre d'imprimante à jet d'encre selon l'une quelconque des revendications précédentes pour une impression sur un substrat.

15. Utilisation de l'encre d'imprimante à jet d'encre selon l'une quelconque des revendications 1 à 13 pour une impression sur un substrat non poreux.

16. Objet **caractérisé en ce que** l'objet est doté d'une impression par une encre d'imprimante à jet d'encre selon l'une quelconque des revendications 1 à 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009083176 A1
- WO 2009010288 A2
- WO 2004035684 A2
- US 20060034787 A1
- WO 2007054379 A1

- EP 1862511 A1
- US 20080250970 A1
- US 20080182083 A1
- WO 2009083176 A
- WO 2004087816 A